# EUROPEAN PATENT APPLICATION

(11) **EP 1 150 258 A2**
(43) Date of publication of application: **31.10.2001**
(21) Application number: 00118534.7
(22) Date of filing: 25.08.2000
(51) Int. Cl.: G07F 7/10

(54) **Method and system for paying a fee for recycling a used product**

(30) Priority: 28.04.2000 JP 2000130756
(71) Applicant: Hitachi, Ltd., Chiyoda-ku, Tokyo 101-8010 (JP)
(72) Inventor: Soga, Shuji, Hitachi, Ltd., Intell. Prop. Group, Chiyoda-ku, Tokyo 100-8220 (JP); Ishibashi, Akira, Hitachi, Ltd., Intell. Prop. Gr., Chiyoda-ku, Tokyo 100-8220 (JP); Ishitomi, Katsuya, Hitachi, Ltd, Intell. Prop. Gr, Chiyoda-ku, Tokyo 100-8220 (JP); Hiroshige, Yuzo, Hitachi, Ltd, Intell. Prop. Group, Chiyoda-ku, Tokyo 100-8220 (JP); Dobashi, Akira, Hitachi, Ltd., Intell. Prop. Group, Chiyoda-ku, Tokyo 100-8220 (JP)
(74) Representative: Strehl Schübel-Hopf & Partner

(57) **Abstract**

A method of paying the fee of recycling a used product is disclosed, which includes the steps of managing ID information of a recycle certificate issued and sales information indicating the recycle certificate sold to a discharger in a corresponding relation with each other to form recycle certificate information (112), calculating a recycle certificate sales price based on contents of the recycle certificate information and demanding and receiving the calculated recycle certificate sales price (114), and paying the demanded recycle certificate sales price (122). As a result, the account for the fees of the product recycle among plural entities involved in the product recycle can be settled both accurately and properly.

## Description

### BACKGROUND OF THE INVENTION

The present invention relates to a system for paying the fee charged to recycle a product, or in particular to a technique effectively applicable to a product recycle fee payment system for settling the account between those involved in the product recycle process including the receiving of a used product discharged by a discharger, the transportation and the processing for recycling of the product.

In the conventional system for recycling a used product, the discharger brings the used product into a used product receiving organization such as a product distributor, requests him to recycle the used product and pays the fee for recycling the used product in a lump sum to the used product receiving organization. In the process, each used product receiving organization attaches a duplicated voucher to each used product in order to manage the used product while at the same time separating a voucher copy for the management at the used product receiving organization. After that, a used product distribution organization and a used product processing organization each separate a copy of the voucher attached to the used product at the time of transportation and processing, respectively, and based on these voucher copies, demand the payment of the distribution fee and the recycle processing fee to the used product receiving organization. The used product receiving organization collates the demand from the used product distribution organization and the used product processing organization with the information contained in the voucher copy separated at the time of receiving the product, and when they are coincident with each other, pays the distribution fee and the recycle processing fee to the used product distribution organization and the used product processing organization, respectively. By this system, the account of the product recycle fees is settled among the entities involved in the product recycle.

In the product recall/recycle, a technique is available which simplifies the payment of the recall/recycle fees and permits the monitoring of the accomplishment of the recall/recycle work. According to this technique, when a dealer visits the user to take a product, the recall/recycle fee to be demanded by the recall/recycle organization is calculated from the information contained in an electronic tag, and the upper limit of the recall/recycle fee that the maker can afford to pay to the recall/recycle organization is compared with the recall/recycle fee calculated from the information contained in the electronic tag. When the recall/recycle fee thus calculated is not more than the upper limit, the recall/recycle fee is written as electronic money in the electronic tag, while when the recall/recycle fee is higher than the upper limit, an instruction is displayed not to entrust the recall/ recycle to the organization but to bring back the waste product to the maker.

### SUMMARY OF THE INVENTION

In the conventional system, the time and labor is required for the used product receiving organization to manage the receiving voucher and the cash received from the discharger, and also for the used product distribution organization and the used product processing organization to handle the voucher. Further, the used product receiving organization is required to collate the demand from the used product distribution organization and the used product processing organization with the receiving voucher.

The effective utilization and reduction in waste is one of the objects of the product recycle which does not necessarily create a profit. Assume, for example, that a discharger who is a general consumer brings in a used product and requests a used product receiving organization such as a neighboring small-sized retail store or the like. The management of the receiving voucher and the cash received from the discharger may be complicated and burdensome for the small-sized retail store and may have an adverse effect on the business thereof. A similar problem is posed when a small-sized carrier or a recycle factory is a used product distribution organization or a used product processing organization.

Further, in the conventional system, the discharger is required to make an inquiry at a used product receiving organization when desiring to make sure that the used product has been properly processed. In view of the fact that such an inquiry is not necessarily received from the discharger by the used product receiving organization, however, it is often unclear whether the used product has been properly recycled in a manner commensurate with the amount of the fee paid by the discharger. When the recycle is not proper, the fee is required to be refunded to the discharger, and this refunding requires the work of checking the voucher and the demand on the part of the used product receiving organization. This consumes a considerable amount of labor.

In addition, considering the environmental problem which is a major topic of the day, the duplication type of voucher used in the conventional system is a subject of discussion from the viewpoint of the present-day tendency and desire to eliminate the use of paper or to reduce the amount of paper.

The object of the present invention is to solve the problem mentioned above and to provide a technique capable of settling the account accurately and properly among the entities involved in the product recycle.

According to the present invention, there is provided a system for paying the fee for each stage of recycle of a used product on behalf of each organization.

In a recycle fee payment system according to the present invention, the conventional voucher of duplication type for paying the product recycle fee is replaced by a recycle certificate having a storage medium for storing the identification (ID) number of each used product and the information on the product recycle fees for receiving, distributing and processing each used product.

A discharger purchases the recycle certificate for discharging a used product. At the time of purchase, the ID number and the fee information of the recycle certificate are read by a recycle certificate sales system and transmitted to a recycle certificate management system.

The discharger, attaching the recycle certificate to the used product, brings it to a used product receiving organization. In the process, the ID number of the recycle certificate is read by a used product receiving system, and together with the discharger information, is transmitted to the recycle certificate management system. The ID number of the recycle certificate is read and transmitted to the recycle certificate management system also when a used product distribution organization takes the used product or when a used product processing organization receives the delivery of the used product or performs the recycling process.

In the recycle certificate management system, the sales information transmitted from the recycle certificate sales system, the receiving information transmitted from the used product receiving system, the take-over information transmitted from the used product distribution system and the delivery/recycle information transmitted from the used product recycle system are collectively managed as recycle certificate information with the ID number or each recycle certificate as a key. Based on the recycle certificate information, the receiving fee, the distribution fee and the processing fee required for the product recycle are paid to the used product receiving organization, the used production distribution organization and the used product processing organization involved, respectively.

Also, when the recycle certificate management system refers to the recycle certificate and extracts therefrom information indicating that a particular used product remains unprocessed for a predetermined period of time from the time it is received, and determines that the particular used product has not been properly recycled, the management system refunds the product recycle fee to the discharger of the used product.

As described above, according to the present invention, the receiving fee, the distribution fee and the processing fee for the recycle of a used product are paid by a product recycle fee payment system. Therefore, the time and labor for cash management and the voucher management accompanying the payment of product processing fees by the entities engaged in the product recycle such as the used product receiving organization, the used product distribution organization and the used product processing organization are saved on the one hand and the account for the product processing fees can be accurately settled among the entities involved in the product recycle on the other hand.

Also, according to the present invention, the discharger can be informed of whether the recycle process commensurate with the fee paid by him is properly conducted or not in order to refund the fee to the discharger when the recycle processing fails to be properly conducted. Further, the work for handling the inquiries to the receiving organization from the dischargers can be remarkably reduced.

As described above, in the product recycle fee payment system according to the present invention, the fee for each stage of the product recycle is paid on behalf of each related organization, and therefore the account of product recycle fees can be accurately and properly settled among the entities involved.

### BRIEF DESCRIPTION OF THE DRAWINGS

Fig. 1 is a diagram showing a functional configuration of a product recycle fee payment system according to an embodiment of the present invention.
Fig. 2 is a diagram showing a hardware system configuration of a product recycle fee payment system according to an embodiment of the present invention.
Fig. 3 is a flowchart showing the steps of the process for selling the recycle certificate to a discharger according to an embodiment of the present invention.
Fig. 4 is a diagram showing an example of a recycle certificate information file 302 according to an embodiment of the present invention.
Fig. 5 is a flowchart showing the steps of the process for receiving a used product from a discharger according to an embodiment of the present invention.
Fig. 6 is a flowchart showing the steps of the process in which a used product distribution organization takes a used product according to an embodiment of the present invention.
Fig. 7 is a flowchart showing the steps of the process in which a used product processing organization receives the delivery of and recycling a used product according to an embodiment of the present invention.
Fig. 8 is a flowchart showing the steps of the process for paying the recycle processing fees according to an embodiment of the present invention.
Fig. 9 is a flowchart showing the steps of the process for demanding and paying the recycle certificate sales price according to an embodiment of the present invention.
Fig. 10 is a flowchart showing the steps of the process for refunding the fees according to an embodiment of the present invention.

### DESCRIPTION OF THE EMBODIMENTS

An explanation will be given below of a product recycle fee payment system for paying the fee for recycling a used product according to one embodiment of the present invention.

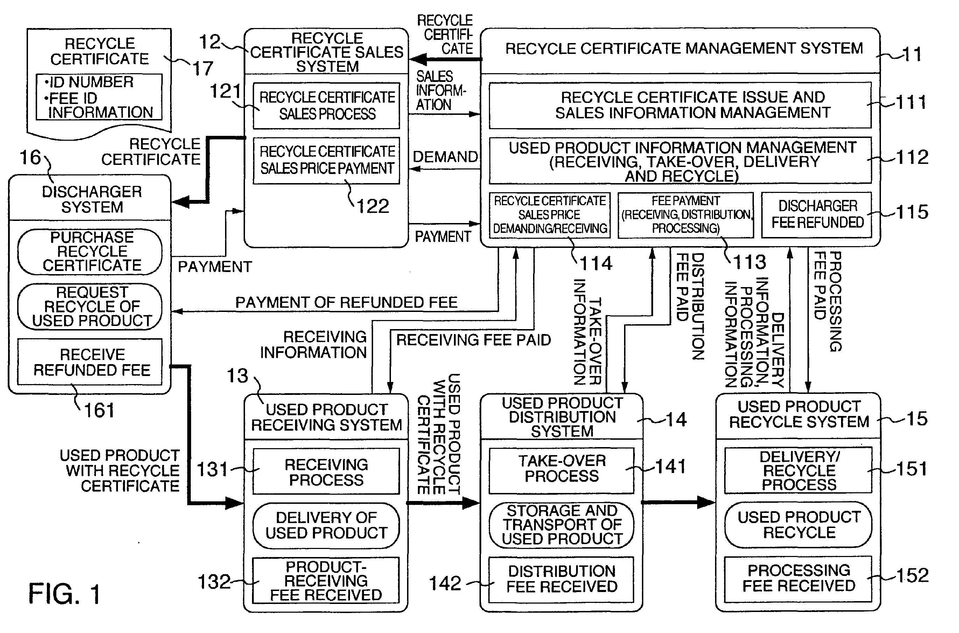

Fig. 1 is a diagram showing a functional configuration of a product recycle fee payment system according to an embodiment. As shown in Fig. 1, the product recycle fee payment system according to this embodiment comprises a recycle certificate management system 11, a recycle certificate sales system 12, a used product receiving system 13, a used product distribution system 14, a used product recycle system 15, a discharger system 16 and a recycle certificate 17.

The recycle certificate management system 11 which constitutes the nucleus of the product recycle fee payment system is for settling the account of fees among the entities engaged in the used product recycle process including the receiving of a used product from a discharger, the transportation and the recycle of the used product.

The recycle certificate sales system 12 is for selling the recycle certificate 17 at a recycle certificate sales organization such as a convenience store. The used product receiving system 13 is for receiving a used product carrying the recycle certificate 17 from a discharger at a used product receiving organization such as a retail store selling the product.

The used product distribution system 14 is for managing the distribution of the used products at the used product distribution organization such as a distributor for transporting the used products from the used product receiving organization to the used product processing organization. The used product recycle system 15 is for managing the process for delivering and recycling the used products at the used product processing organization such as a recycle factory.

The discharger system 16 is for the discharger receiving the information on the payment of the fee to be refunded and making inquiry about the recycle situation. The recycle certificate 17 is a recording medium for storing the identification (ID) information by which each used product can be uniquely identified and the fee ID information by which the fees related to the product recycle can be identified.

The recycle certificate management system 11 includes a recycle certificate issue/sales information management unit 111, a used product information management unit 112, an fee payment unit 113, a recycle certificate sales price demand/receiving unit 114 and a discharger fee refunding unit 115.

The recycle certificate issue/sales information management unit 111 is for managing the recycle certificate information including the ID information of the recycle certificate 17 issued and the sales information indicating the recycle certificate 17 sold to the discharger, in a manner corresponding to each other.

The used product information management unit 112 is for securing a correspondence between the ID information of the recycle certificate 17 attached to a used product and the information indicating the progress of the recycle of the used product. The used product information management unit 112 receives the receiving information, the take-over information and the delivery/recycle information for the used product transmitted from the used product receiving system 13, the used product distribution system 14 and the used product recycle system 15 and managing them as recycle certificate information.

The fee payment unit 113 is for calculating the receiving fee, the distribution fee and the recycle processing fee as the fees for each stage of the product cycle based on the contents of the recycle certificate information, and transmits the information for the payment of the fee to the used product receiving system 13, the used product distribution system 14 and the used product recycle system 15 thereby to pay the fees based on the recycle certificate sales price of the recycle certificate attached to the particular used product.

The recycle certificate sales price demand/receiving unit 114 is for calculating the recycle certificate sales price based on the contents of the recycle certificate information, transmitting the information for the demand of the recycle certificate sales price to the corresponding recycle certificate sales system 12 and receiving the information for the payment of the recycle certificate sales price transmitted from the recycle certificate sales system 12 thereby to demand and receive the recycle certificate price calculated.

The discharger fee refund unit 115 is for inspecting the progress of the product recycle based on the contents of the recycle certificate information, calculating the amount of the fee to be refunded to the discharger who has discharged a used product not in recycle after the lapse of a predetermine period of time, and refunding the fee by transmitting the information on the fee to be refunded to the discharger system 16.

A program for causing the recycle certificate management system 11 to function as the recycle certificate issue/sales information management unit 111, the used product information management unit 112, the fee payment unit 113, the recycle certificate sales price demand/receiving unit 114 and the discharger fee refund unit 115 is recorded in a recording medium such as a CD-ROM and stored in a magnetic disk. The program then is loaded in memory and executed. The recording medium for recording the program may be store means other than the CD-ROM.

The recycle certificate sales system 12 includes a recycle certificate sales unit 121 and a recycle certificate sales price payment unit 122.

The recycle certificate sales unit 121 is for acquiring the sales information at the time of sale of the recycle certificate 17 to the discharger and transmitting it to the recycle certificate management system 11. The recycle certificate sales price payment unit 122 transmits the information on the payment of the recycle certificate sales price to the recycle certificate management system 11 and pays the recycle certificate sales price based on the sales information of the recycle certificate 17 or the recycle certificate sales price demand information transmitted from the recycle certificate management system 11.

Assume that the program for causing the recycle certificate sales system 12 to function as the recycle certificate sales unit 121 and the recycle certificate sales price payment unit 122 is recorded in a recording medium such as a CD-ROM and after being stored in a magnetic disk or the like, is loaded on a memory and executed. The recording medium for recording the program may be store means other than the CD-ROM.

The used product receiving system 13 includes a receiving unit 131 and a product-receiving fee receiving unit 132.

The receiving unit 131 reads ID information from the recycle certificate 17 attached to a used product at the time of receiving a particular used product from the discharger and transmits it with the receiving-related information to the recycle certificate management system 11. The product-receiving fee receiving unit 132 is for receiving the information for the payment of the product-receiving fee transmitted from the recycle certificate management system 11 thereby to receive the product-receiving fee.

The program for causing the used product receiving system 13 to function as the receiving unit 131 and the product-receiving fee receiving unit 132 is recorded in a recording medium such as a CD-ROM, stored in a magnetic disk or the like, and loaded onto a memory and executed. The recording medium for recording the program may be any other recording medium than the CD-ROM.

The used product distribution system 14 includes a take-over unit 141 and a distribution fee receiving unit 142.

The take-over unit 141 is for reading the ID information from the cycle certificate 17 attached to a used product when taking it for transportation from the used product receiving organization to the used product processing organization, and together with the distribution- related information, transmits it to the recycle certificate management system 11. The distribution fee receiving unit 142 receives information on the payment of the distribution fee transmitted from the recycle certificate management system 11 thereby to receive the distribution fee.

The program for causing the used product distribution system 14 to function as the take-over unit 141 and the distribution fee receiving unit 142 is recorded in a recording medium such as the CD-ROM, and then executed by being loaded on a memory. The recording medium for recording this program may be another recording medium than the CD-ROM.

The used product recycle system 15 includes a inward delivery/recycle processing unit 151 and a processing fee receiving unit 152.

The delivery/recycle processing system 151 reads the ID information from the recycle certificate 17 attached to the used product when receiving the delivery of the used product for recycle, reads the ID information from the recycle certificate 17 attached to the used product similarly when the used product is subjected to the recycle process, and transmits the ID information to the recycle certificate management system 11 together with the information related to the delivery/recycle. The processing fee receiving unit 152 is for receiving the processing fee by receiving information on the payment of the recycle processing fee transmitted from the recycle certificate management system 11 and thereby receives the processing fee.

The program for causing the used product recycle system 15 to function as the delivery/recycle processing unit 151 and the processing fee receiving unit 152 is recorded in a recording medium such as a CD-ROM, stored in a magnetic disk and executed by being loaded in a memory. The recording medium for recording the program may be another recording medium than the CD-ROM.

The discharger system 16 includes a refund fee receiving unit 161. The refund fee receiving unit 161 is for receiving information on the payment of the fee to be refunded which is transmitted from the recycle certificate management system 11 and for making an inquiry about the recycle condition.

The program causing the discharger system 16 to function as the refunded fee receiving unit 161 is recorded in a recording medium such as a CD-ROM, stored in a magnetic disk or the like, and then executed by being loaded in a memory. The recording medium for recording this program may be another recording medium than the CD-ROM.

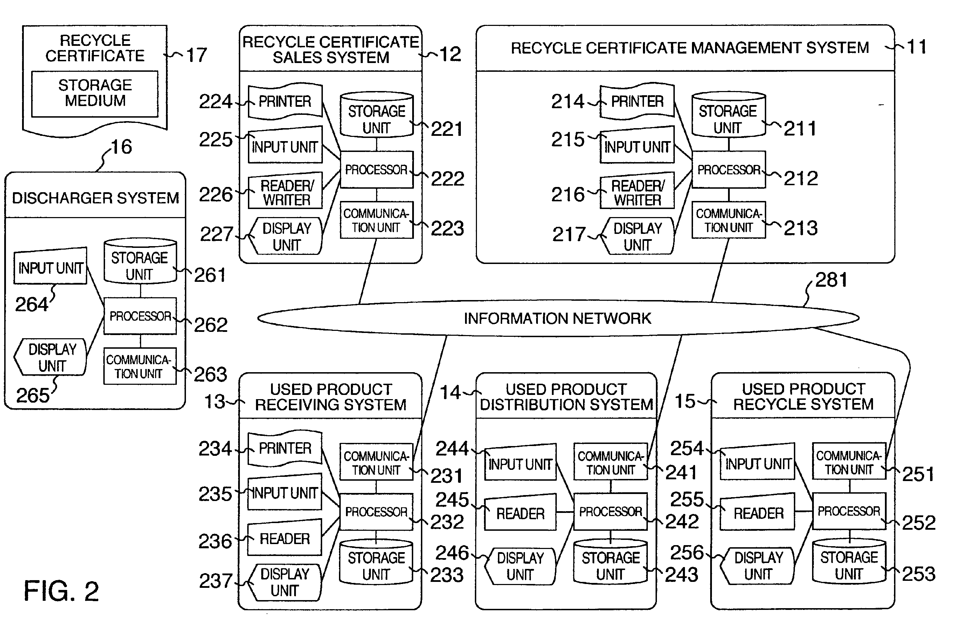

Fig. 2 is a diagram showing a hardware system configuration of a product recycle fee payment system according to an embodiment of the invention. The recycle certificate 17 including a storage medium such as an IC chip or a bar code may be in the form of either a storage medium alone or a storage medium attached to the paper or the like.

The recycle certificate management system 11 includes a processor 212, a storage unit 211 for storing the recycle certificate information, etc., a communication unit 213, a printer 214, an input unit 215, a reader/writer 216 for reading information from and writing information to the storage medium of the recycle certificate 17 and a display unit 217. The reader/writer 216 is an IC reader/writer when the storage medium of the recycle certificate 17 is an IC chip, and a bar code reader and a bar code printer when the storage medium of the recycle certificate 17 is a bar code.

The recycle certificate sales system 12 includes a processor 222, a storage unit 221 for storing sales information, etc. of the recycle certificate 17, a communication unit 223, a printer 224, an input unit 225, a reader/writer 226 for reading recycle certificate ID information and writing fee information from and into the storage medium of the recycle certificate 17 and a display unit 227.

The used product receiving system 13 includes a processor 232, a storage unit 233 for storing receiving information for the used product, etc., a communication unit 231, a printer 234 for outputting the receipt or the like to be delivered to the discharger, an input unit 235 for inputting discharger information or the like at the time of receiving the used product, a reader 236 for reading recycle certificate ID information from the storage medium of the recycle certificate 17 and a display unit 237 for displaying product-receiving information. The reader 236 is an IC reader when the storage medium of the recycle certificate 17 is an IC chip, and a bar code reader when the storage medium of the recycle certificate 17 is a bar code.

The used product distribution system 14 includes a processor 242, a storage unit 243 for storing take-over information of the used product, a communication unit 241, a reader 245 for reading recycle certificate ID information from the storage medium of the recycle certificate 17, and a display unit 246 for displaying the take-over information.

The used product recycle system 15 includes a processor 252, a storage unit 253 for storing inward delivery/recycle information of the used product, a communication unit 251, a reader 255 for reading recycle certificate ID information from the storage medium of the recycle certificate 17, and a display unit 256 for displaying the inward delivery/recycle information.

The discharger system 16 includes a processor 262, a storage unit 261 for storing information on the fee refund, a communication unit 263, an input unit 264 and a display unit 265.

The recycle certificate management system 11, the recycle certificate sales system 12, the used product receiving system 13, the used product distribution system 14, the used product recycle system 15 and the discharger system 16 are connected to an information network 281 by way of the communication unit of each system.

Now, with reference to the accompanying drawings, an explanation will be given of the operation of a product recycle fee payment system according to the embodiment, including the process for selling the recycle certificate to the discharger, the process for receiving the used product from the discharger, the process for the used product distribution organization to take the used product, the process for the used product processing organization to receive the delivery of and recycle the used product, the process for paying the recycle processing fee, the process for demanding/paying the recycle certificate sales price and the process for refunding the fee, which will be explained in that order.

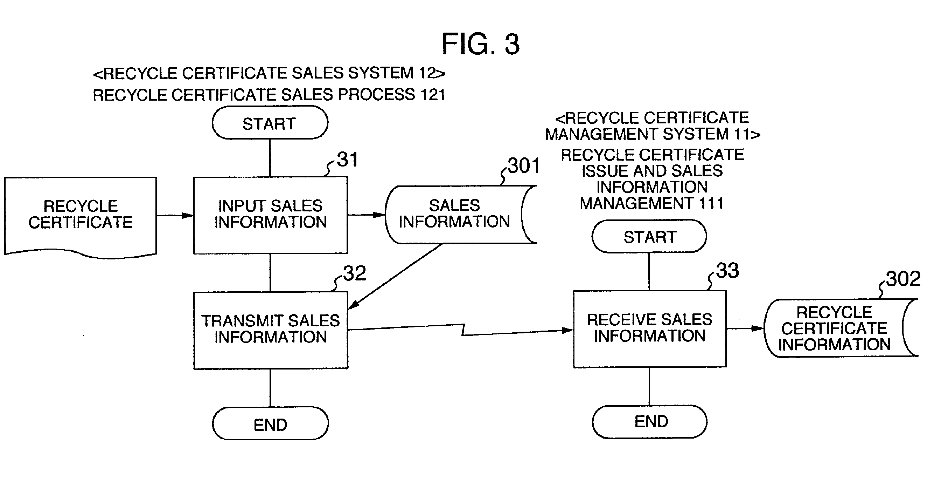

Fig. 3 is a flowchart showing the steps of the process for selling the recycle certificate to the discharger according to this embodiment. In step 31 of Fig. 3, the recycle certificate sales unit 121 of the recycle certificate sales system 12 reads ID information of the recycle certificate 17 using the reader/writer 226 based on a recycle certificate purchase request from the discharger. Also, product recycle fee information including a receiving fee corresponding to the recycle certificate purchase request from the discharger, a distribution fee and a recycle processing fee is acquired from the input unit 225, and using the reader/writer 226, the information by which the product recycle fees including the receiving fee, the distribution fee and the recycle processing fee can be identified is written in the recycle certificate 17. The recycle certificate sales date and the recycle certificate sales organization ID number are added to the ID information of the recycle certificate acquired and the product recycle fee information, and are stored in a sales information file 301 in the storage unit 221.

In the aforementioned process, the ID information of the recycle certificate acquired, the product recycle fee information, etc. may be displayed on the display unit 227 or the ID information of the product recycle fees may be attached to the recycle certificate 17 so as to output using the printer 224 in different colors. A method of acquiring the product recycle fee information using the input unit 225 may be one of reading a bar code corresponding to the fee using the bar code reader from the price list containing the bar code and the corresponding fee information.

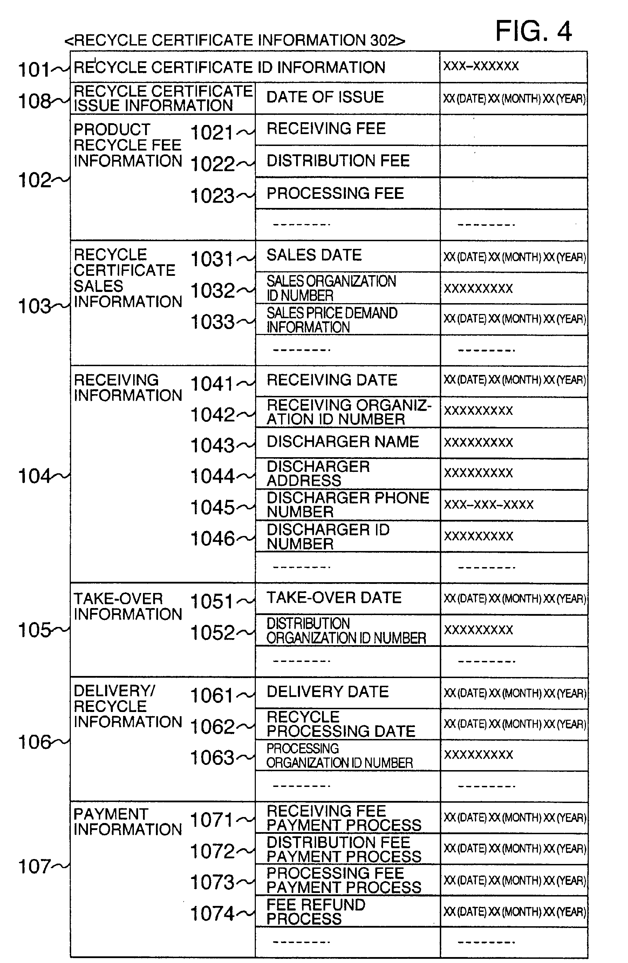

Fig. 4 is a diagram showing an example of the recycle certificate information file 302 according to this embodiment. Assume that the recycle certificate 17 having stored therein the ID information is distributed to the organizations selling the recycle certificate 17 to the dischargers and the recycle certificate sales organizations have the recycle certificate 17 in store. Also assume that ID information 101 of the recycle certificate 17 issued and recycle certificate issue information 108 are stored in the recycle certificate information file 302 in the storage unit 211 of the recycle certificate management system 11 before the sales of the recycle certificate 17 to the discharger. Also, a sales organization ID number 1032 corresponding to the address to which the recycle certificate 17 is distributed may be stored together.

In step 32, the recycle certificate sales unit 121 acquires a recycle certificate ID number 101, product recycle fee information 102, a sales date 1031, the sales organization ID number 1032, etc. from the sales information file 301 stored in the storage unit 221 in step 31, and transmits them to the recycle certificate management system 11 through the information network 281 using the communication unit 223.

In step 33, a recycle certificate issue/sales information management unit 111 of the recycle certificate management system 11 receives, through the communication unit 213, recycle certificate sales information 103 including the recycle certificate ID number 101, product recycle fee information 102, the sales date 1031, the sales organization ID number 1032 and sales price demand information 1033 transmitted from the recycle certificate sales system 12, and stores them in the recycle certificate information file 302 in the storage unit 211 with the recycle certificate ID information 101 as a key. Sales price demand information 1033 specifies the time when product recycle fee should be paid.

In the process for selling the recycle certificate to the discharger, the sales information is transmitted (step 32) following the input of the sales information (step 31) in the flowchart shown in Fig. 3. Nevertheless, these steps may be performed in different timings according to different programs.

For the process of selling the recycle certificate to the discharger, another method than mentioned above is conceivable as described below. Specifically, assume that the recycle certificate 17 that has been distributed during the recycle certificate sales period has stored therein the product recycle fee ID information as well as the recycle certificate ID information 101, and the product recycle fee ID information is not written in the recycle certificate 17 in step 31. Also, not only the recycle certificate ID information 101 but also the product recycle fee ID information is read from the recycle certificate 17, but the product recycle fee information 102 is not acquired from the input unit 225. The other points are similar to the aforementioned method. Thus, according to the method under consideration, the recycle certificate sales system 12 is required to have only the read function as the reader/writer 226.

The following method is also conceivable for selling the recycle certificate to the discharger. Specifically, in step 31, the recycle certificate sales organization ID number is written in the recycle certificate 17 in step 31, but the sales information is not transmitted from the recycle certificate sales system 12 to the recycle certificate management system 11. As an alternative, in the process of receiving the used product from the discharger as described later, the recycle certificate sales organization ID number is read from the recycle certificate 17 in addition to the recycle certificate ID number 101 and the product recycle fee ID number by the used product receiving system 13 and transmitted to the recycle certificate management system 11. This method eliminates the need of transmission of the sales information shown in step 32 to the recycle certificate management system 11 by the recycle certificate sales system 12.

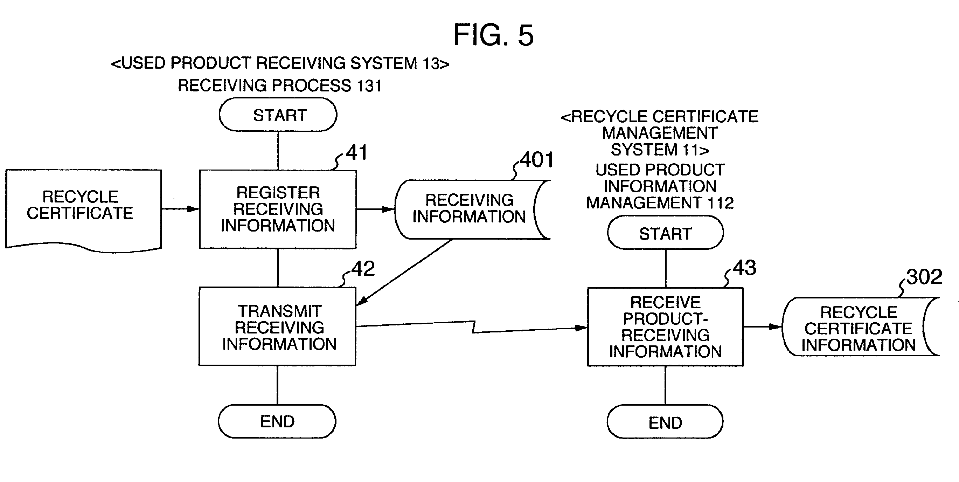

Fig. 5 is a flowchart showing the steps of the process for receiving a used product from the discharger according to this embodiment. In step 41 of Fig. 5, the receiving unit 131 of the used product receiving system 13 acquires, by way of the reader 236 in the used product receiving system 13, the ID information and the fee ID information from the recycle certificate 17 attached to the used product, at the time of receiving the used product from the discharger. Also, the information on the discharger including the name, the address, the telephone number of the discharger and the ID number of the discharger system 16 held by the discharger are acquired from the input unit 235. In addition to the recycle certificate ID number 101, the fee ID information and the information on the discharger thus acquired, the receiving-related information including the receiving date/time and the person in charge of receiving are acquired and stored in a receiving information file 401 in the storage unit 233.

The information including the recycle certificate ID information 101, the fee ID information, the information on the discharger and the receiving-related information acquired in step 41 may be displayed on the display unit 237. Also, a receipt describing the recycle certificate ID information 101, the fee information, the information on the discharger and the receiving-related information to be delivered to the discharge for certification may be output on the printer 234.

Then in step 41, the receiving unit 131 acquires the receiving information including the recycle certificate ID information 101, the information on the discharger and the receiving-related information from the receiving information file 401 stored in the storage unit 233 in step 41, and transmits them to the recycle certificate management system 11 through the information network 281 using the communication unit 231.

In step 43, the used product information management unit 112 of the recycle certificate management system 11 receives through the communication unit 213 the receiving information 104 including the recycle certificate ID information 101, a discharger name 1043, a discharger address 1044, a discharger telephone number 1045, a discharger ID number 1046, a received date 1041 and a receiving organization ID number 1042 transmitted from the used product receiving system 13, and stores them in the recycle certificate information file 302 of the storage unit 211 with the recycle certificate ID information 101 as a key.

In the process for receiving the used product from the discharger, the receiving information is transmitted (step 42) following the registration (step 41) of the receiving information shown in the flowchart of Fig. 5. These steps, however, may be executed separately in different timing as different programs.

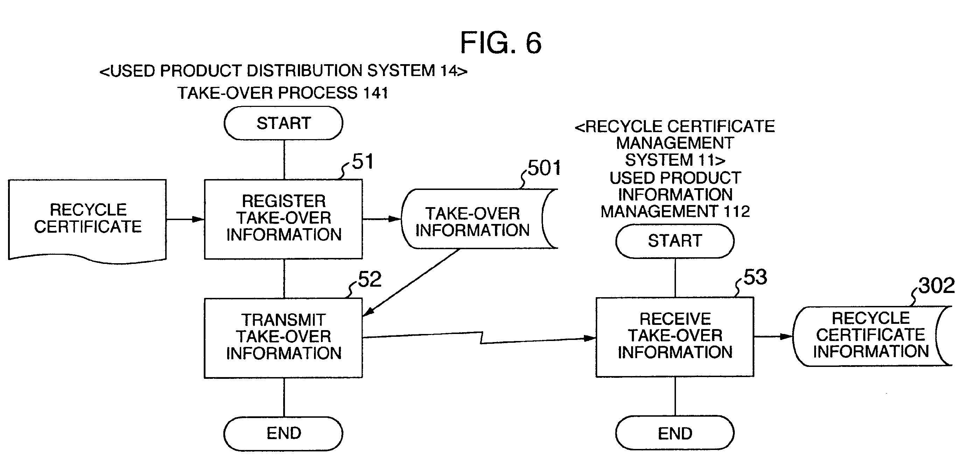

Fig. 6 is a flowchart showing the steps of the process of the used product distribution organization to taking the used product according to this embodiment. In step 51 of Fig. 6, when the used product distribution organization takes the used product from the used product receiving organization, the take-over unit 141 of the used product distribution system 14 acquires the ID information and the fee ID information from the recycle certificate 17 attached to the used product using the reader 245 of the used product distribution system 14. In addition to the acquired recycle certificate ID information 101 and the fee ID information, the take-over related information including the take-over date/time and the person in charge of take- over are acquired using the input unit 244 or the like and stored in a take-over information file 501 of the storage unit 243. In step 51, these information may be displayed on the display unit 246 based on the acquired recycle certificate ID information 101, the fee ID information and the take-over related information.

In step 52, the take-over unit 141 acquires the take-over information including the recycle certificate ID information 101 and the take-over related information from the take-over information file 501 stored in the storage unit 243 in step 51, and the take-over information thus acquired is transmitted to the recycle certificate management system 11 through the information network 281 using the communication unit 241.

In step 53, the used product information management unit 112 of the recycle certificate management system 11 receives, by way of the communication unit 213, the recycle certificate ID information 101 and a take-over information 105 including a take-over date 1051 and a distribution organization ID number 1052 transmitted from the used product distribution system 14, and stores them in the recycle certificate information file 302 of the storage unit 211 with the recycle certificate ID number 101 as a key.

In the aforementioned process of the used product distribution organization to take the used product, the take-over information (step 52) is transmitted following the registration of the take-over information (step 51) in the flowchart of Fig. 6. Nevertheless, these steps can be executed according to different programs in different timing.

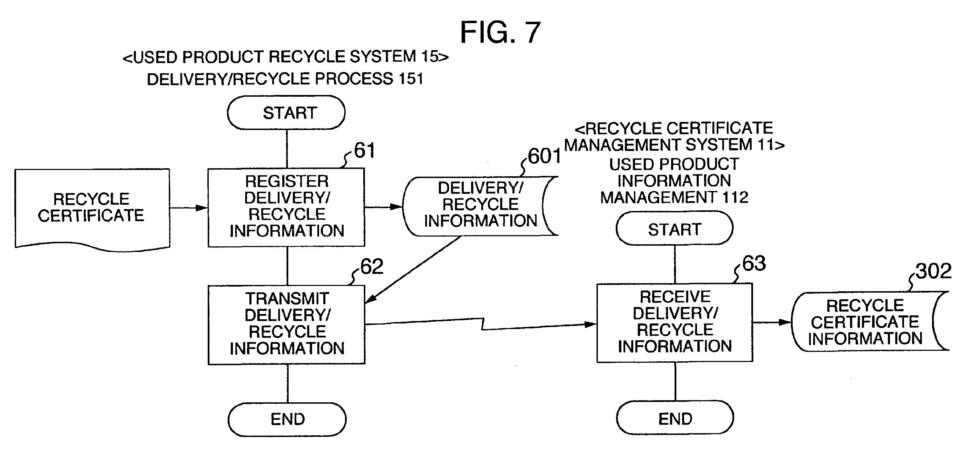

Fig. 7 is a flowchart showing the steps of the the process for the used product processing organization to receive the delivery of and recycle the used product according to this embodiment. In step 61 of Fig. 7, when the used product processing organization receives the delivery of the used product, the delivery/recycle unit 151 of the used product recycle system 15 acquires the ID information and the fee ID information by use of the reader 255 of the used product recycle system 15 from the recycle certificate 17 attached to the used product. In addition to the recycle certificate ID information 101 and the fee ID information thus acquired, the delivery-related information such as the delivery date/time is acquired by use of the input unit 254 or the like, and stored in the delivery/recycle information file 601 of the storage unit 253. In a similar fashion, the used product processing organization, when performing the process of recycling the used product, acquires the recycle process-related information such as the recycle processing date/time in addition to the recycle certificate ID information 101, and stores them in a delivery/recycle information file 601 with the recycle certificate ID information 101 as a key.

In step 61, the recycle certificate ID information 101, the fee ID information, the delivery-related information and the recycle process-related information acquired as above may be displayed on the display unit 256.

Then, in step 62, the delivery/recycle unit 151 acquires the delivery/recycle information 106 such as the recycle certificate ID information, the delivery-related information and the recycle process-related information from the delivery/recycle information file 601 stored in the storage unit 253 in step 61, and transmits them to the recycle certificate management system 11 through the information network 281 by use of the communication unit 251.

In step 63, the used product information management unit 112 of the recycle certificate management system 11 receives, by way of the communication unit 213, the recycle certificate ID information 101 and a delivery/recycle information 106 including, a delivery date 1061, a recycle processing date 1062 and a processing organization ID number 1063 transmitted from the used product recycle system 15, and stores them in the used product information file of the storage unit 211 with the recycle certificate ID information 101 as a key.

In the used product delivery/recycle process performed by the used product processing organization, the delivery/recycle information is transmitted (step 62) following the registration (step 61) of the delivery/recycle information in the flowchart of Fig. 7. These steps, however, may be performed in different timing according to different programs.

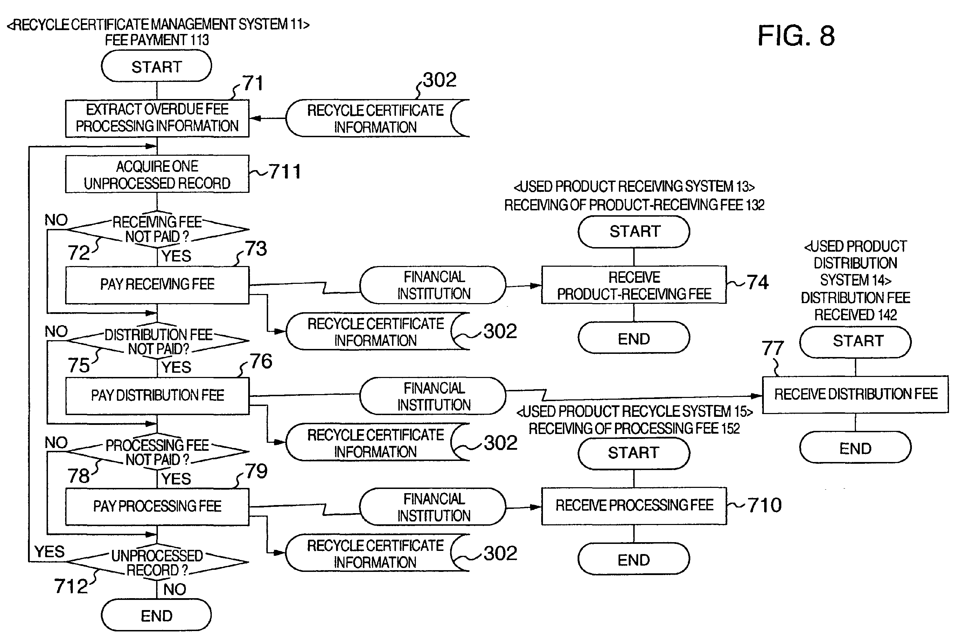

Fig. 8 is a flowchart showing the steps of the process for paying the recycle processing fee according to this embodiment. In step 71 of Fig. 8, the fee payment unit 113 of the recycle certificate management system 11 extracts from the recycle certificate information file 302 of the storage unit 211 such records that the recycle certificate issue information 108 is produced, there exists the receiving information 104, the take-over information 105 and/or the delivery/ recycle information 106, and the fee payment date is not recorded in a receiving fee payment date 1071, a distribution fee payment date 1072 or a processing fee payment date 1073 in a payment information 107.

In step 711, the fee payment unit 113 takes out one of the unprocessed records from the records extracted in step 71, followed by step 72 for checking whether the fee payment date is recorded or not in the receiving fee payment date 1071 of the acquired record, and when the fee payment date is not recorded in the receiving fee payment date 1071, the process proceeds to step 73. In step 73, the information related to the fee payment including the date of payment by transfer of the receiving fee 1021 is transmitted to the used product receiving system 13 corresponding to the receiving organization ID number 1042 in the acquired record. through the information network 281 using the communication unit 213. Then, the receiving fee payment date is recorded in the receiving fee payment date 1071 of the record extracted, thereby updating the recycle certificate information file 302 of the storage unit 211.

In step 74, the product-receiving fee receiving unit 132 of the used product receiving system 13 receives, by way of the communication unit 231, the information on the payment of the receiving fee transmitted from the recycle certificate management system 11 through the information network 281 in step 73, and stores them in the storage unit 233.

In step 73, the information on the payment of the receiving fee 1021 may be transmitted to the corresponding used product receiving system 13 only in the case where both the receiving information 104 and the take-over information 105 exist in the record acquired in step 711. Also, in steps 73 and 74, in addition to or in place of transmission and receiving of the information on the payment of the receiving fee 1021, the receiving fee may be paid by transfer from the recycle certificate management system 11 to the corresponding used product receiving system 13 through a financial institution.

In step 75, the fee payment unit 113 of the recycle certificate management system 11 checks whether the fee payment date is recorded or not in the distribution fee payment date 1072 in the record acquired in step 711, and when the fee payment date is not recorded in the distribution fee payment date 1072, the process proceeds to step 76. In step 76, the information on the fee payment including the date of payment by transfer of the distribution fee is transmitted to the used product distribution system 14 corresponding to the distribution organization ID number 1052 in the record acquired through the information network 281 using the communication unit 213. The distribution fee payment date is recorded in the distribution fee payment date 1072 of the extracted record and the recycle certificate information file 302 in the storage unit 211 is updated.

In step 77, the distribution fee receiving unit 142 of the used product distribution system 14 receives by way of the communication unit 241 the information on the payment of the distribution fee 1022 transmitted from the recycle certificate management system 11 through the information network 281 in step 76, and stores them in the storage unit 243.

In step 76, the information on the payment of the distribution fee 1022 may be transmitted to the corresponding used product distribution system 14 only when the record acquired in step 711 contains both the take-over information 1022 and the delivery/recycle information 106. Also, in steps 76 and 77, in addition to or in place of transmission and receiving of the information on the payment of the distribution fee 1022, the distribution fee may be paid by transfer from the recycle certificate management system 11 to the corresponding used product distribution system 14 through a financial institution or the like.

In step 78, the fee payment unit 113 of the recycle certificate management system 11 checks whether the fee payment date is recorded or not in the processing fee payment date 1073 of the record acquired in step 711, and in the case where the fee payment date is not recorded in the processing fee payment date 1073, the process proceeds to step 79. In step 79, the information on the fee payment including the date on which the processing fee 1023 is to be paid by transfer is transmitted to the used product recycle system 15 corresponding to the processing organization ID number 1063 of the record acquired through the information network 281 using the communication unit 213. The processing fee payment date is recorded in the processing fee payment date 1073 of the extracted record and the recycle certificate information file 302 in the storage unit 211 is updated.

In step 710, the processing fee receiving unit 152 of the used product recycle system 15 receives by way of the communication unit 251 the information on the payment of the recycle processing fee transmitted from the recycle certificate management system 11 through the information network 281 in step 79, and stores them in the storage unit 253.

In step 79, the information on the payment of the processing fee 1023 may be transmitted to the corresponding used product recycle system 15 only when the record acquired in step 711 contains both the delivery date 1061 and the recycle processing date 1062. Also, in steps 79 and 710, in addition to or in place of transmission and receiving of the information on the payment of the processing fee 1023, the processing fee may be paid by transfer from the recycle certificate management system 11 to the corresponding used product recycle system 15 through a financial institution or the like.

In step 712, the record extracted in step 71 is checked whether it contains a unprocessed record, and when there remains any unprocessed record, the step 711 and subsequent steps are repeated. The process is terminated only when all the records extracted in step 71 have been completely processed.

In the process of payment of the recycle processing fee described above, the records extracted in step 71 of the flowchart shown in Fig. 8 are processed one by one in step 711 and subsequent steps. Instead of doing so, however, the records can be processed collectively.

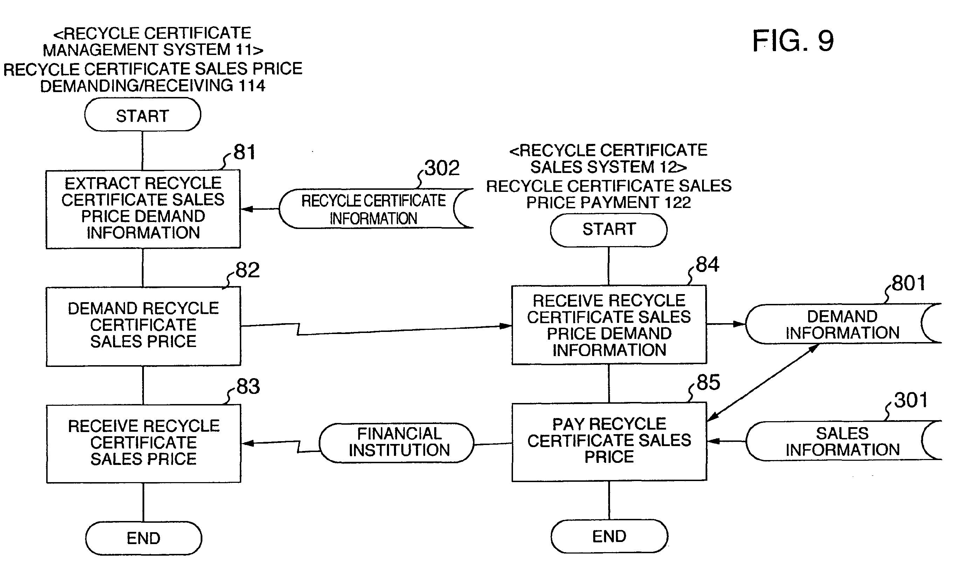

Fig. 9 is a flowchart showing the steps of the process for demanding and paying the recycle certificate sales price according to this embodiment. In step 81 of Fig. 9, the recycle certificate sales price demand/ receiving unit 114 of the recycle certificate management system 11 extracts the record not containing the sales price demand information 1033 from the recycle certificate information file 30 stored in the storage unit 211.

Then, in step 82, the recycle certificate sales price demand/receiving unit 114 classifies the records extracted in step 81, with the sales organization ID number 1032 in the record as a key. The product recycle fee information 102 is totalized by class, and transmitted as the recycle certificate sales price demand information to the recycle certificate sales system 12 corresponding to the sales organization ID number 1032 by way of the information network 281 using the communication unit 213. Further, a recycle certificate information file 302 in the storage unit 211 is updated by setting the sales price demand information 1033 as the sales price demand date.

In step 82, in addition to the totalization information of the product recycle fee information 102, the detailed information of the product recycle fee information 102 including the recycle certificate ID information 101 may be transmitted. Also, the totalization information and the detailed information of the product recycle fee information 102 may be output using a printer 214. Further, when producing the demand information, the commission to be paid to the recycle certificate sales organization may be taken into account.

In step 84, the recycle certificate sales price payment unit 122 of the recycle certificate sales system 12 receives, by way of the communication unit 223, the recycle certificate sales price demand information transmitted from the recycle certificate management system 11 and stores them in a demand information file 801 of the storage unit 221.

In step 85, by reference to the demand information stored in the demand information file 801 of the storage unit 221 in step 84, the information on the payment of the recycle certificate sales price demand is transmitted to the recycle certificate management system 11 through the information network 281 using the communication unit 223. The fact that the information on the payment of the recycle certificate sales price demand has been transmitted is recorded in the corresponding portion of the demand information file 801 of the storage unit 221. In transmitting the information on the payment of the recycle certificate sales price demand, the demand information file 801 is collated with the sales information file 301 in the storage unit 221, and after displaying the result of collation on the display unit 227, the information may be transmitted with the input from the input unit 225 as a trigger.

In step 83, the recycle certificate sales price demand/receiving unit 114 of the recycle certificate management system 11 receives by way of the communication unit 213 the information on the payment of the recycle certificate sales price demand transmitted from the recycle certificate sales system 12 in step 85, and stores them in the storage unit 211.

In steps 83 and 85, in addition to or in place of the transmission and receiving of the information on the payment of the recycle certificate sales price demand, the recycle certificate sales price may be paid by transfer from the recycle certificate sales system 12 to the recycle certificate management system 11 through a financial institution or the like.

In the recycle certificate sales price demand and payment process described above, the demand (step 82) of the recycle certificate sales price in the flowchart of Fig. 9 is followed by the receiving (step 83) of the recycle certificate sales price. These steps, however, can be executed as different programs in different timings. In similar manner, the receiving of the information on the recycle certificate sales price demand (step 84) and the payment of the recycle certificate sales price (step 85) may be executed as different programs in different timings.

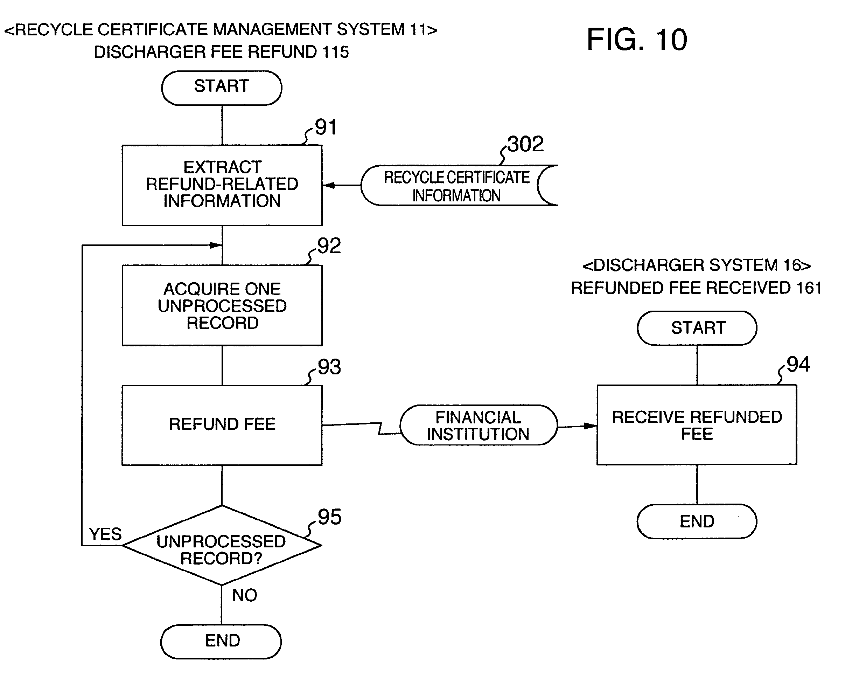

Fig. 10 is a flowchart showing the steps of the process for refunding the fee according to this embodiment. In step 91 of Fig. 10, the discharger fee refund unit 115 of the recycle certificate management system 11 extracts, from the recycle-certificate information file 302 of the storage unit 211, the records having the receiving data 1041 of the receiving information 104 older than the present date by a predetermined period of time or longer and lacking any corresponding delivery/recycle information 106.

In step 92, one of the records extracted in step 91 is retrieved. In step 93, the information on the fee refunding of the product recycle fee information 102 is transmitted to the discharger system 16 corresponding to the discharger ID number 1046 of the record acquired in step 92, through the information network 281 using the communication unit 213. The the recycle certificate information file 302 in the storage unit 211 is updated with a fee refund date 1074 in the extracted record set as the fee refund processing date.

In step 95, the records extracted in step 91 are checked whether there remains any unprocessed record or not. When an unprocessed record remains, the step 92 and subsequent steps are repeated, and upon complete processing of all the records extracted in step 91, the process is terminated.

In step 94, the fee refund receiving unit 161 of the discharger system 16 receives, by way of the communication unit 263, the information on the refunding of the product recycle fee transmitted from the recycle certificate management system 11 through the information network 281 in step 93, and stores them in the storage unit 261.

In steps 93 and 94, in addition to or in place of the transmission and receiving of the information on the fee refunding of the product recycle fee information 102, the product recycle fee to be refunded from the recycle certificate management system 11 to the corresponding discharge system 16 may be repaid by transfer through a financial institution or the like.

As described above, according to the embodiment, the receiving fee, the distribution fee and the processing fee for the recycle of a used product are paid by a product recycle fee payment system thereby to save the labor for the cash management and voucher management accompanying the payment of the product processing fees on the part of the entities engaged in the product recycle including the used product receiving organization, the used product distribution organization and the used product processing organization, while at the same time assuring accurate payment of the product processing fees between the entities engaged in the product recycle.

Also according to this embodiment, in order to refund the fees to the discharger when the proper recycle process fails to be performed, the discharger can be informed whether the proper recycle process is carried out in a manner commensurate with the fee paid by him. Further, the work of the receiving organization for responding to the inquiries from the discharger is remarkably saved.

Furthermore, according to the embodiment, the process from the receiving of the used product to the recycle can be traced, and therefore illegal waste disposal is effectively suppressed. In addition, according to the embodiment, the conventional voucher of duplication type is replaced by the recycle certificate having a storage medium for storing the ID number for identifying each used product and the information permitting the identification of the receiving fee, transportation fee and the processing fee of the used product. Therefore, the paper voucher can be eliminated or the paper consumption can be reduced in the payment of the product processing fees.

As described above, in the used product recycle fee payment system according to this embodiment, the payment of the fees in each stage of the product recycle is carried out on behalf of each organization in each stage, and therefore the account settlement among the entities concerned for the fees related to the product recycle can be accomplished both accurately and properly.

According to the present invention, the payment of the fees in each stage of the product recycle is carried out on behalf of each organization, and therefore the account settlement among the entities concerned for the fees related to the product recycle can be accomplished both accurately and properly.

## Claims

1. A method of settling accounts to a fee for recycling a used product, comprising the steps of:
managing identification (ID) information of an issued recycle certificate and sales information of a recycle certificate sold to a discharger with a relation corresponding to each other (11) to form recycle certificate information; and
calculating a recycle certificate sales price based on contents of said recycle certificate information and demanding and receiving said calculated recycle certificate sales price (12).

2. A method of settling accounts to a fee for recycling a used product, comprising the steps of:
managing ID information of a recycle certificate given to a used product and information indicating the progress of recycling of said used product with a relation corresponding to each other to form recycle certificate information; and
calculating the fee of each progress stage of used product recycle based on contents of said recycle certificate information and paying said fee from a sales price of said recycle certificate given to said used product.

3. A method of settling accounts to a fee for recycling a used product according to Claim 2,
wherein said information indicating the progress of product recycle includes receiving information indicating that a used product has been received by a used product receiving organization, take-over information indicating that the used product has been taken by a used product distribution organization for transporting said used product or delivery/recycle information indicating that said used product has been delivered to or recycled in a used product processing organization, and said fee for each progress stage of said product recycle includes a receiving fee accrued at said used product receiving organization, a distribution fee accrued at the used product distribution organization and a recycle fee accrued at said used product processing organization.

4. A method of settling accounts to a fee for recycling a used product, comprising the steps of:
managing a recycle certificate ID number given to the used product and information indicating the progress of product recycle of said used product so as to relate with each other to establish recycle certificate information; and
inspecting the progress of the product recycle based on contents of said recycle certificate information, and calculating and refunding an amount of refund to a discharger when said used product discharged by said discharger is not recycled after the lapse of a predetermined period of time.

5. A method of settling accounts to a fee for recycling a used product according to Claim 4,
wherein said information indicating the progress of product recycle includes receiving information indicating that a used product has been received by a used product receiving organization, take-over information indicating that the used product has been taken by a used product distribution organization for transporting said used product or delivery/recycle information indicating that said used product has been delivered to or recycled in a used product processing organization, and said fee for each progress stage of said product recycle includes a receiving fee accrued at said used product receiving organization, a distribution fee accrued at the used product distribution organization and a recycle fee accrued at said used product processing organization.

6. A system for settling accounts to a fee for recycling a used product, comprising:
means (111) for managing ID information of a recycle certificate issued and sales information indicating the recycle certificate sold to a discharger so as to relate with corresponding to each other to establish recycle certificate information; and
means (114) for calculating a recycle certificate sales price based on contents of said recycle certificate information and demanding and receiving said calculated recycle certificate sales price.

7. A system for settling accounts to a fee for recycling a used product, comprising:
means (112) for managing ID information of a recycle certificate given to the used product and information indicating the progress of recycle of said used product so as to relate with each other to establish recycle certificate information; and
means (113) for calculating the fee at each progress stage of used product recycle based on contents of said recycle certificate information and paying said fee from a sales price of the recycle certificate given to said used product.

8. A system for settling accounts to a fee for recycling a used product, comprising:
used-product information managing means (112) for relating ID information of a recycle certificate given to the used product with information indicating the progress of product recycle of said used product to establish recycle certificate information; and
discharger refunding means (115) for inspecting the progress of the product recycle based on contents of said recycle certificate information, calculating an amount of the fee to be refunded to a discharger of the used product that has not been recycled after the lapse of a predetermined period of time, and refunding the calculated fee to said discharger.

9. A computer-readable recording medium for storing a program for implementing by a computer to settle accounts to a fee for recycling a used product, said program comprising:
program code means for managing ID information of a recycle certificate issued and sales information indicating the recycle certificate sold to a discharger with a relation corresponding to each other to form recycle certificate information; and
program code means for calculating a recycle certificate sales price based on contents of said recycle certificate information and demanding and receiving said calculated recycle certificate sales price.

10. A computer-readable recording medium for storing a program for implementing by a computer to settle accounts to of a fee for recycling a used product, said program comprising:
program code means for managing ID information of a recycle certificate given to the used product and information indicating the progress of recycle of said used product with a relation corresponding to each other to form recycle certificate information; and
program code means for calculating an amount of the fee at each progress stage of the product recycle based on contents of said recycle certificate information and paying said fee by using a sales price of the recycle certificate given to said used product.

11. A computer-readable recording medium for storing a program for implementing by a computer to settle accounts to a fee for recycling a used product, said program comprising:
program code means for managing ID information of the recycle certificate given to said used product and information indicating the progress of recycle of said used product with a relation corresponding to each other to form recycle certificate information; and
program code means for inspecting the progress of product recycle based on contents of said recycle certificate information, calculating an amount of the fee to be refunded to a discharger of the used product not recycled after the lapse of a predetermined period of time, and refunding the calculated fee to the discharger.
